# EUROPÄISCHE PATENTSCHRIFT

(11) **EP 0 582 599 B1**
(45) Veröffentlichungstag und Bekanntmachung des Hinweises auf die Patenterteilung: **14.08.1996**
(21) Anmeldenummer: 92909040.5
(22) Anmeldetag: 18.04.1992
(51) Int. Cl.: H04N 3/185, H04N 5/63, H02M 3/335

(54) **SCHALTUNG ZUR STABILISIERUNG DER HOCHSPANNUNG IN EINEM FERNSEHEMPFÄNGER**
CIRCUIT FOR HIGH VOLTAGE STABILIZATION IN A TELEVISION RECEIVER
CIRCUIT POUR LA STABILISATION DE LA HAUTE TENSION DANS UN RECEPTEUR DE TELEVISION

(30) Priorität: 27.04.1991 DE 4113822
(43) Veröffentlichungstag der Anmeldung: 16.02.1994
(73) Patentinhaber: DEUTSCHE THOMSON-BRANDT GMBH, 78048 Villingen-Schwenningen (DE)
(72) Erfinder: GOSEBERG, Walter, D-3000 Hannover 91 (DE)
(74) Vertreter: Einsel, Robert, Dipl.-Ing.
(86) Internationale Anmeldenummer: EP9200868
(87) Internationale Veröffentlichungsnummer: WO9220185

(56) Entgegenhaltungen:
- US-A- 4 958 110
- Patent Abstracts of Japan, Band 12, Nr 308, E647, Zusammenfassung von JP 63- 73878, publ 1988-04-04

## Beschreibung

Die Erfindung geht aus von einer Schaltung gemäß dem Oberbegriff des Anspruchs 1.

An eine derartige Stabilisierungsschaltung werden verschiedene Anforderungen gestellt. Das sind insbesondere eine wirkungsvolle Regelung für die Hochspannung zur Erzielung eines niedrigen Innenwiderstandes der Hochspannungsquelle, ein einfacher Schaltungsaufbau und ein dynamisch stabiles Verhalten ohne Schwingneigung. Es war bisher nicht immer möglich, alle gestellten Anforderungen ausreichend zu erfüllen. Das gilt insbesondere für neuartige HDTV-Geräte mit 16:9 Bildschirm mit erhöhter Hochspannung und erhöhten Anforderungen.

Der Erfindung liegt die Aufgabe zugrunde, eine Stabilisierungsschaltung der beschriebenen Art zu schaffen, die einen einfachen Schaltungsaufbau aufweist, dynamisch stabil arbeitet, keine Schwingneigung aufweist und hohen Wirkungsgrad hat.

Diese Aufgabe wird erfindungsgemäß dadurch gelöst, daß eine zur Hochspannung proportionale Spannung an den Modulationseingang eines Impulsweitenmodulators angelegt und dessen Ausgang mit dem Steuereingang eines Schalters verbunden ist, dessen eine Klemme mit einer zweiten Betriebsspannung und dessen andere Klemme über eine Diode mit einer Klemme der ersten Betriebsspannung und über eine Induktivität mit einem Ende der genannten Reihenschaltung verbunden ist, das über einen Kondensator an eine Klemme der ersten Betriebsspannung angeschlossen ist. Vorteilhafte Weiterbildungen der Erfindung sind in den Unteransprüchen angegeben.

Es ist auch eine Schaltung bekannt (Patents abstract of Japan, 12, No. 308, E-647 & JP-A- 63 73878), bei der eine zur Hochspannung proportionale Spannung an den Modulationseingang eines Impulsweitenmodulators angelegt und dessen Ausgang mit dem Steuereingang eines Schalters verbunden ist. Der Schalter liegt parallel zu einer Diode, die in Reihe mit einem Kondensator und einer Drosselspule parallel zur Betriebsspannung eines Hochspannungsschalters liegt. Durch diese Schaltung wird die Rücklaufdauer der Hochspannungsschaltung beeinflußt, während die eigentliche Betriebsspannung für den Hochspannungschalter der Hochspannungserzeugungsschaltung unverändert bleibt.

Es hat sich gezeigt, daß durch die impulsweitenmodulierte Einkopplung eines Stromes in den Fußpunkt des Zeilenendstufentransistors oder in Reihe zur Primärwicklung eine außerordentlich dynamisch stabile Wirkungsweise und damit eine geringe Schwingneigung erreicht werden. Das beruht unter anderem darauf, daß bei der Schaltung keine Frequenzänderung, sondern nur eine Amplitudenänderung durchgeführt wird. Durch die geschlossene Regelschleife werden eine gute Stabilisierung und somit ein geringer Innenwiderstand der Hochspannungsquelle erreicht. Die Schaltung ist auch besonders einfach, da für die Realisierung nur einfache handelsübliche Bauteile erforderlich sind.

Verschiedene Ausführungsbeispiele der Erfindung werden im folgenden anhand der Zeichnung erläutert. Darin zeigen
- Fig. 1: eine Zeilenendstufe mit der erfindungsgemäßen Schaltung,
- Fig. 2: Kurven zur Erläuterung der Strom- und Spannungsverläufe in Fig. 1,
- Fig. 3: ein vereinfachtes Prinzipschaltbild zur Erläute rung der Wirkungsweise der Schaltung nach Fig. 1,
- Fig. 4: eine Abwandlung der Schaltung nach Fig. 1,
- Fig. 5: ein vereinfachtes Prinzipschaltbild zur Erläuterung der Wirkungsweise der Schaltung nach Fig. 4 und
- Fig. 6: eine Weiterbildung der Schaltung zur zusätzli chen Heizung der Bildröhre.

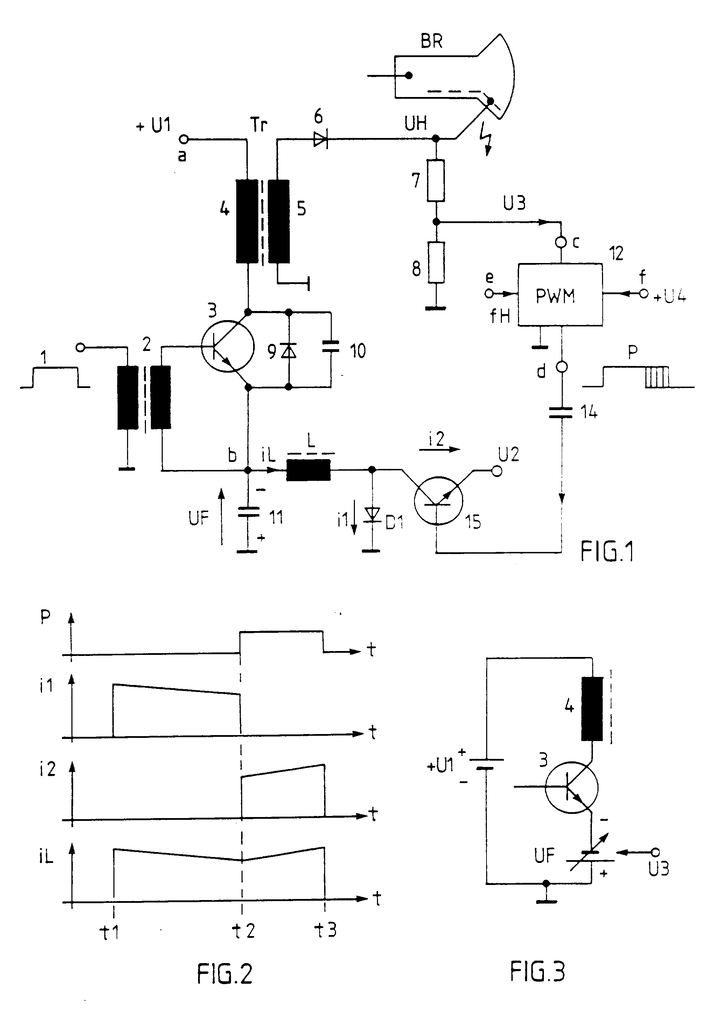

In Fig. 1 ist die zeilenfrequente Schaltspannung 1 über den Treibertransformator 2 an die Basis des als Leistungsschalter dienenden Zeilenendstufentransistors 3 angelegt. Im Kollektorkreis des Transistors 3 liegt der Zeilentransformator Tr, dessen Primärwicklung 4 an die Betriebsspannung +U1 angeschlossen ist und dessen Hochspannungswicklung 5 über den Gleichrichter 6 die Hochspannung UH für die Hochspannungsanode der Bildröhre BR liefert. Mit dem Spannungsteiler 7, 8 wird die Hochspannung von etwa 30 - 35 kV auf eine Spannung U3 in der Größenordnung von 20 V heruntergeteilt. Dargestellt sind ferner die Rücklaufdiode 9 und der Rücklaufkondensator 10. Die soweit beschriebene Schaltung ist bekannt.

Im Gegensatz zur bekannten Schaltung ist der Fußpunkt b des Transistors 3, also der Emitter, nicht geerdet, sondern über den Kondensator 11 mit Erde verbunden. Die zur Hochspannung UH proportionale Spannung U3 gelangt auf den Eingang c des Impulsweitenmodulators 12. Der Modulator 12 ist durch die Zeilenfrequenz fH von der Klemme e synchronisiert, kann aber auch auf einer niedrigeren oder höheren Frequenz frei schwingen. Der Modulator 12 erzeugt einen Impuls P, dessen Impulsbreite durch U3 und damit proportional zu Hochspannungsabweichung vom Sollwert moduliert ist. Dieser Impuls P gelangt über den Kondensator 14 auf die Basis des Transistors 15. Der Transistor 15 ist einerseits über die Induktivität L an den Fußpunkt b und andererseits an die Spannung U2 von etwa -100 V angeschlossen. U2 kann mit einem Gleichrichter aus der Impulsspannung am Transformator Tr erzeugt werden.

Fig. 2 zeigt den Verlauf des vom Transistor 3 gelieferten Gleichstromanteils des Zeilenablenkstroms während der Zeilenperiode t1 - t3. Von t1 - t2 hat der Impuls P vom Ausgang d des Impulsweitenmodulators 12 den Wert null. Der Transistor 15 ist daher gesperrt. Der vom Transistor 3 gelieferte, über die Induktivität L fließende Strom iL fließt jetzt als Strom il über die leitende Diode D1 nach Masse. Von t2 - t3 ist der Transistor 15 durch den positiven Anteil des Impulses P leitend gesteuert. Durch die negative Spannung U2 an der Anode der Diode D1 ist D1 gesperrt. Der Strom iL fließt daher jetzt als Strom i2 über den leitenden Transistor 15 zur negativen Betriebsspannung U2. Die Summe der Ströme il über D1 und i2 über den Transistor 15 ergibt also der Strom iL durch die Induktivität L. Durch den Strom i2 über den Transistor 15 wird der Kondensator 11 in negativer Richtung auf eine Fußpunktspannung UF aufgeladen. Am Fußpunkt b bildet sich daher eine negative Spannung UF aus, deren Größe von der Dauer des positiven Anteils des Impulses P, als dem Zeitraum t2 - t3 des Stromflusses i2 durch den Transistor 15 und damit von der Abweichung der Hochspannung UH vom ihrem Sollwert abhängig ist.

Wenn z.B. die Hochspannung UH sinkt, sinkt auch die Spannung U3 am Eingang c des Modulators 12. Durch die Impulsweitenmodulation wird die Dauer t2 - t3, während der der Impuls P positiv ist, größer. Das bedeutet, daß die Einschaltdauer des Transistors 15 größer wird. Das bedeutet wiederum, daß die Spannung UF am Kondensator 11 in negativer Richtung ansteigt. Das wiederum bedeutet, daß die über der Reihenschaltung von Primärwicklung 4 und Transistor 3 wirksame Betriebsspannung größer wird. Durch die Erhöhung der wirksamen Betriebsspannung am Transistor 3 wird somit die angenommene Verringerung der Hochspannung UH ausgeregelt.

Fig. 3 zeigt im Prinzip die Wirkungsweise der Schaltung nach Fig. 1. Die positive, stabile Betriebsspannung +U1 bildet eine erste Batterie, deren Klemmen zwischen dem oberen Ende der Primärwicklung 4 und Erde liegen. Der Kondensator 11 von Fig. 1 bildet eine zweite Batterie mit dem negativen Pol am Emitter des Transistors 3. Die Spannung UF dieser Batterie ist jedoch im Gegensatz zu U1 nicht konstant, sondern in der beschriebenen Weise von der Spannung U3 und damit von der Abweichung der Hochspannung UH vom Sollwert abhängig. Durch die Regelung von UF in Abhängigkeit von UH ändert sich somit die über der Reihenschaltung 3, 4 wirksame Betriebsspannung. Diese Betriebsspannung indessen beeinflußt in der beschriebenen Weise die Hochspannung UH. Sinngemäß ist also im Fußpunkt des Transistors 3 eine Batterie wirksam, deren Spannung proportional zur Abweichung der Hochspannung UH geändert wird.

Die negative zweite Betriebsspannung U2 und die Betriebsspannung +U4 für den Modulator 12 können über Gleichrichterschaltungen aus der Impulsspannung am Transformator Tr gewonnen werden. Die zur Hochspannung UH proportionale Spannung U3 kann auch von der Fokussierspannung abgeleitet werden. Die Fokussierspannung wird in der Regel über einen Gleichrichter gewonnen, der an einen Abgriff der Hochspannungswicklung 5 angeschlossen ist.

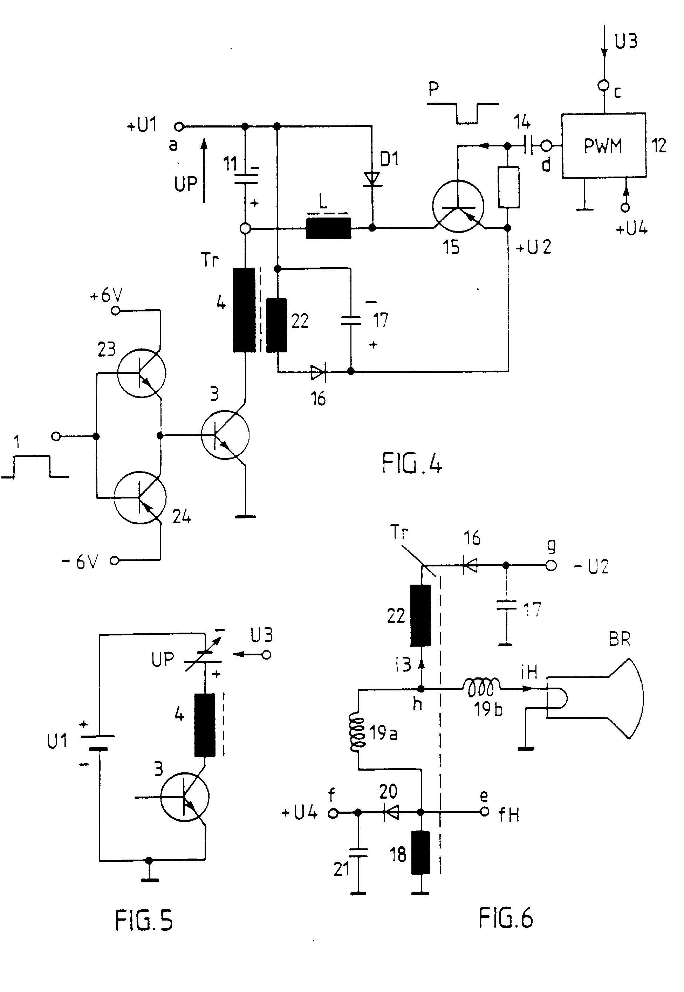

Fig. 4 zeigt eine Abwandlung der Schaltung nach Fig. 1. Im Gegensatz zu Fig. 1 liegt der Kondensator 11 nicht im Fußpunkt des Transistors 3, sondern zwischen der Primärwicklung 4 und der Betriebsspannungsklemme a. Die Wirkungsweise der Bauteile L, D1, 12, 14, 15 ist im Prinzip die gleiche wie in Fig. 1. Die Polung der Bauteile ist jedoch so, daß nunmehr an dem Kondensator 11 eine positive Spannung UP erzeugt wird. Diese positive Spannung UP addiert sich zu der positiven Spannung U1 und ist von der Dauer des negativ gerichteten Impulses P und damit von der Dauer der leitenden Phase des Transistors 15 abhängig. Entsprechend ist im Gegensatz zu Fig. 1 die Spannung U2 positiv. U2 wird aus der Impulsspannung an der zusätzlichen Sekundärwicklung 22 mit dem Gleichrichter 16 und dem Kondensator 17 gewonnen. Die Ansteuerung des Transistors 3 erfolgt über die beiden komplementären Transistoren 23, 24. Die Schaltung gemäß Fig. 4 hat den Vorteil, daß der Emitter des Transistors 3 unmittelbar geerdet sein kann. Das ist z.B. erwünscht, wenn die Ansteuerung des Transistors 3 wie in Fig. 4 mit einer komplementären Transistorstufe erfolgt. Die Bauteile 5, 6, 9, 10 in Fig. 1 sind in Fig. 4 zur Vereinfachung weggelassen.

Fig. 5 zeigt ein Prinzipschaltbild für die Wirkungsweise der Schaltung nach Fig. 4. Die von U3 abhängige Spannung UP liegt im Gegensatz zu Fig. 1, 3 nicht im Fußpunkt des Transistors 3, sondern zwischen der Primärwicklung 4 und der Betriebsspannungsquelle a für U1.

Der Transformator Tr gemäß Fig. 1 oder 4 kann eine zusätzliche Sekundärwicklung zur Erzeugung der Heizspannung für die Bildröhre BR aufweisen. Dann tritt zunächst folgender Nachteil ein. Wenn die Heizspannung an dieser Wicklung bei geringer Belastung des Transformators, also Strahlstrom null, 100 % ist, ist diese Spannung bei Vollast von z.B. bei 100 Watt Hochspannungsleistung etwa 110 %, weil die beschriebene Regelung die an der Reihenschaltung 3, 4 wirksame Betriebsspannung bei Vollast erhöht. Eine derartige Erhöhung der Heizspannung ist.aber unerwünscht. Vielmehr ist es aus Gründen der Lebensdauer für die Bildröhre erwünscht, daß die Heizspannung gegenüber Strahl strom null bei Vollast konstant bleibt oder auf etwa 98 - 99 % sinkt.

Fig. 6 zeigt eine Weiterbildung der Schaltung nach Fig. 1 oder Fig. 4 zur zusätzlichen Heizung der Bildröhre BR und zur Gewinnung der Betriebsspannung +U4 für den Modulator 12. Von dem Transformator Tr gemäß Fig. 1 und 4 ist zur Vereinfachung die Primärseite nicht dargestellt. Der Transformator enthält wie in Fig. 4 die Zusatzwicklung 22, mit der die negative zweite Betriebsspannung U2 gemäß Fig. 1 erzeugt wird. Außerdem enthält der Transformator Tr die zusätzliche Sekundärwicklung 18 mit etwa zwei Windungen zur Erzeugung der Heizspannung für die Bildröhre BR. An die Wicklung 18 sind außerdem die Diode 20 und der Kondensator 21 angeschlossen, die an der Klemme f die positive Betriebsspannung +U4 for den Impulsweitenmodulator 12 erzeugen. Durch die aktive Wicklung 18 läßt sich in der Praxis der notwendige Nennwert des Heizstromes iH nicht genügend genau einstellen. Deshalb ist üblicherweise in Reihe zum Heizfaden noch eine gesonderte, vom Transformator Tr getrennte Spule 19b vorgesehen. Diese bildet einen zusätzlichen Vorwiderstand, mit dem der genaue Nennwert von iH eingestellt wird.

Die genannte Spule 19b ist jetzt in Fig. 6 als Spule 19a so geschaltet, daß sie nicht nur von dem Heizstrom iH, sondern auch von dem Strom i3 der Wicklung 22 durchflossen wird, die zur Erzeugung von U2 dient. Die Spule 19a in Fig. 6 erfüllt dabei drei Aufgaben:
1. Zunächst dient die Spule 19a in der beschriebenen Weise als Vorwiderstand zur Einstellung des gewünschten Nennwertes des Heizstromes iH, der sich durch die aktive Heizwicklung 18 in der Praxis nicht genügend genau erreichen läßt.
2. In der Praxis kann es in der Bildröhre BR zu Hochspannungsüberschlägen, sogenannten "sparks", kommen, die auch auf den Heizfaden gelangen. Derartige Überschläge sind für den Gleichrichter 16 ungefährlich, weil dieser wegen der relativ hohen Spannung U2 von etwa 100 V eine ausreichende Spannungsfestigkeit aufweist. Für den Gleichrichter 20, der zur Erzeugung der niedrigeren Spannung +U4 von etwa 25 V dient und somit eine geringere Spannungsfestigkeit aufweist, kann ein solcher Überschlag jedoch gefährlich werden. Diese Gefahr wird nun dadurch verringert, daß zwischen dem Heizfaden der Bildröhre BR und der Anode der Diode 20 noch die Spule 19a wirksam ist, deren Induktivität für derartige Überschläge mit hohen Frequenzen einen ausreichend hohen Vorwiderstand bildet.
3. Bei steigender Belastung des transformators Tr steigt, bedingt durch die Regelung, die Spannung an der Wicklung 18 an, so daß auch der Heizstrom iH in unerwünschter Weise ansteigen würde. Die Spule 19a wird jedoch nicht nur vom Heizstrom iH, sondern zusätzlich von dem Strom i3 durch die Wicklung 22 durchflossen. Der Strom i3 erzeugt dadurch an der Spule 19a einen zusätzlichen Spannungsabfall, der die für den Heizstrom iH entscheidende Spannung am Punkt h wieder verringert. Auf diese Weise kann die unerwünschte Erhöhung der Spannung am Punkt h bei Vollast kompensiert oder auch überkompensiert werden. Durch Bemessung der Spule 19a kann dann erreicht werden, daß der Heizstrom iH gegenüber dem Betrieb mit Strahlstrom null bei Vollast sogar in erwünschter Weise auf etwa 99 oder 98 % absinkt.

Es kann zweckmäßig sein, die Spule 19 für die Einstellung des richtigen Nennwertes von iH aufzuteilen, und zwar in einen ersten Anteil 19a zwischen den aktiven Wicklungen 22, 18 und einen zweiten Anteil 19b zwischen der Klemme h und dem Heizfaden der Bildröhre BR.

Die Spule 19 hat eine Induktivität von etwa 20 - 35 µH. Die Spule 19 könnte grundsätzlich auch durch einen Widerstand ersetzt werden. Ein solcher Widerstand hat aber den Nachteil, daß an ihm im Gegensatz zu einer Spule eine nennenswerte Verlustleistung entsteht.

Bei einem praktisch erprobten Ausführungsbeispiel hatten die in den Figuren dargestellten Bauteile folgende Werte:

| | |
|---|---|
| Widerstand 7: | 800 MOhm |
| Widerstand 8 : | 0,4 MOhm |
| Kondensator 11: | 1 µF |
| Modulator 12 : | Vorverstärker, IC von Typ TEA 5071, Nachverstärker für Ansteuerung von Transistor 15 |
| Diode D1 : | Typ BYW 74 |
| Induktivität L : | 2 - 4 mH |
| Spannung U1 : | +160 V konstant |
| Spannung -U2 : | -100 V |
| Frequenz des Impulses P : | 30 kHz |
| Spannung U4 : | +20 V |

## Patentansprüche

1. Schaltung zur Stabilisierung der Hochspannung in einem Fernsehempfänger mit einem Hochspannungstransformator, (Tr), dessen Primärwicklung (4) mit einem periodisch betätigten Schalttransistor (3) eine an eine erste Betriebsspannung (+U1) angeschlossene Reihenschaltung bildet, eine zur Hochspannung (UH) proportionale Spannung (U3) an den Modulationseingang (c) eines Impulsweitenmodulators (12) angelegt dessen Ausgang (d) mit dem Steuereingang eines Schalters (15) verbunden ist, **dadurch gekennzeichnet**, daß eine Klemme des Schalters (15) mit einer zweiten Betriebsspannung (U2) und die andere Klemme des Schalters (15) über eine Diode (D1) mit einer ersten Klemme der ersten Betriebsspannung (+U1) und über eine Induktivität (L) mit einem Ende der genannten Reihenschaltung verbunden ist, das über einen Kondensator (11) an die erste Klemme (Masse oder a) der ersten Betriebsspannung (+U1) angeschlossen ist.

2. Schaltung nach Anspruch 1, **dadurch gekennzeichnet**, daß der Kondensator (11) zwischen dem Fußpunkt (b) des Schalttransistors (3) und Masse liegt (Fig. 1).

3. Schaltung nach Anspruch 1, **dadurch gekennzeichnet**, daß der Kondensator (11) zwischen der Primärwicklung (4) und der die erste Betriebsspannung (+U1) führenden Klemme (a) liegt (Fig. 4).

4. Schaltung nach Anspruch 2, **dadurch gekennzeichnet**, daß die zweite Betriebsspannung (U2) eine zur ersten Betriebsspannung (+U1) entgegengesetzte Polarität hat.

5. Schaltung nach Anspruch 1, **dadurch gekennzeichnet**, daß die zweite Betriebsspannung (U2) und/oder die Betriebsspannung (+U4) für den Impulsweitenmodulator (12) durch Gleichrichtung vorzugsweise durch Hinlaufgleichrichter (16, 20) aus der Impulsspannung am Transformator (Tr) gewonnen ist.

6. Schaltung nach Anspruch 1, **dadurch gekennzeichnet**, daß der Impulsweitenmodulator (13) durch die Zeilenfrequenz (fH) synchronisiert ist.

7. Schaltung nach Anspruch 1, **dadurch gekennzeichnet**, daß der Schalter durch einen Transistor (15) gebildet ist, dessen Kollektor an die Induktivität (L), dessen Emitter an die zweite Betriebsspannung (U2) und dessen Basis an den Ausgang (d) des Impulsweitenmodulators (12) angeschlossen ist.

8. Schaltung nach Anspruch 7, **dadurch gekennzeichnet**, daß der Transistor (15) ein Leistungs-Feldeffekttransistor ist.

9. Schaltung nach Anspruch 1, **dadurch gekennzeichnet,** daß der Transformator (Tr) eine Heizwicklung (18) für Bildröhre (BR) enthält und in den Weg des Heizstroms (iH) eine Spule (19a) derart eingeschaltet ist, daß diese Spule auch von dem Strom (i3) einer weiteren Sekundärwicklung (22) des Transformators (Tr) durchflossen wird (Fig. 6).

10. Schaltung nach Anspruch 5 und 8, **dadurch gekennzeichnet**, daß die weitere Sekundärwicklung (22) die Wicklung zum Erzeugen der zweiten Betriebsspannung (U2) ist.

11. Schaltung nach Anspruch 1, **dadurch gekennzeichnet,** daß die zur Hochspannung (UH) proportionale Spannung (U3) von der Fokussierspannung abgleitet ist.

## Claims

1. Circuit for stabilising the high tension voltage in a television receiver including a high tension transformer (Tr) whose primary winding (4) together with a periodically actuated switching transistor (3) forms a series circuit that is connected to a first operating voltage (+U1), a voltage (U3), which is proportional to the high tension voltage (UH), is applied to the modulating input (c) of a pulse width modulator (12) whose output (d) is connected to the control input of a switch (15), characterised in that, one terminal of the switch (15) is connected to a second operating voltage (U2) and the other terminal of the switch (15) is connected via a diode (D1) to a first terminal of the first operating voltage (+U1) and via an inductance (L) to one end of the said series circuit which is connected via a capacitor (11) to the first terminal (earth or a) of the first operating voltage (+U1).

2. Circuit in accordance with Claim 1, characterised in that, the capacitor (11) is located between the base point (b) of the switching transistor (3) and earth (Fig. 1).

3. Circuit in accordance with Claim 1, characterised in that, the capacitor (11) is located between the primary winding (4) and the terminal (a) carrying the first operating voltage (+U1) (Fig. 4).

4. Circuit in accordance with Claim 2, characterised in that, the second operating voltage (U2) has a polarity which is opposite to that of the first operating voltage (+U1).

5. Circuit in accordance with Claim 1, characterised in that, the second operating voltage (U2) and/or the operating voltage (+U4) for the pulse width modulator (12) is obtained by a rectifying process, preferably by a forward slope detector (16, 20), from the pulse voltage on the transformer (Tr).

6. Circuit in accordance with Claim 1, characterised in that, the pulse width modulator (13) is synchronised by the line frequency (fH).

7. Circuit in accordance with Claim 1, characterised in that, the switch is formed by a transistor (15) whose collector is connected to the inductance (L), whose emitter is connected to the second operating voltage (U2) and whose base is connected to the output (d) of the pulse width modulator (12).

8. Circuit in accordance with Claim 7, characterised in that, the transistor (15) is a power field effect transistor.

9. Circuit in accordance with Claim 1, characterised in that, the transformer (Tr) includes a heater winding (18) for a picture tube (BR) and a coil (19a) is connected into the path of the heater current (iH) in such a way that this coil is also traversed by the current (i3) from a further secondary winding (22) of the transformer (Tr) (Fig. 6).

10. Circuit in accordance with Claim 5 and 8, characterised in that, the further secondary winding (22) is the winding for producing the second operating voltage (U2).

11. Circuit in accordance with Claim 1, characterised in that, the voltage (U3), which is proportional to the high tension voltage (UH), is derived from the focusing voltage.

## Revendications

1. Circuit pour la stabilisation de la haute tension dans un téléviseur intégrant un transformateur haute tension (Tr) dont l'enroulement primaire (4) couplé avec un transistor de commutation (3) à fonctionnement périodique, constitue un montage série connecté à une première tension de service (+U1), une tension (U3) proportionnelle à la haute tension (Uh) appliquée à l'entrée de modulation (c) d'un modulateur d'impulsions en durée (12) dont la sortie (d) est reliée à l'entrée de commande d'un commutateur (15), circuit **caractérisé en ce que** l'une des bornes dudit commutateur (15) est connectée à une seconde tension de service (U2), et que l'autre borne du commutateur (15) est connectée, par l'intermédiaire d'une diode (D1), à une première borne de ladite première tension de service (+U1) et, par l'intermédiaire d'une inductance (L), à l'une des extrémités dudit montage série, ladite extrémité étant raccordée à la première borne (masse ou a) de la première tension de service (+U1) par l'intermédiaire d'un condensateur (11).

2. Circuit selon la revendication 1 **caractérisé en ce que** ledit condensateur (11) est disposé entre la base (b) dudit transistor de commutation (3) et la masse (Fig. 1).

3. Circuit selon la revendication 1 **caractérisé en ce que** ledit condensateur (11) est disposé entre l'enroulement primaire (4) et la borne (a) fournissant la première tension de service (+U1) (Fig. 4).

4. Circuit selon la revendication 2 **caractérisé en ce que** ladite seconde tension de service (U2) possède une polarité inverse par rapport à ladite première tension de service (+U1).

5. Circuit selon la revendication 1 **caractérisé en ce que** la seconde tension de service (U2) et/ou la tension de service (+U4) pour le modulateur d'impulsions en durée (12) est obtenue par redressement, de préférence à l'aide de redresseurs en sens aller (16, 20), à partir de la tension pulsée disponible au transformateur (Tr).

6. Circuit selon la revendication 1 **caractérisé en ce que** le modulateur d'impulsions en durée (13) est synchronisé par la fréquence de ligne (fH).

7. Circuit selon la revendication 1 **caractérisé en ce que** le commutateur est constitué d'un transistor (15) dont le collecteur est connecté à l'inductance (L), l'émetteur à la seconde tension de service (U2) et la base à la sortie (d) du modulateur d'impulsions en durée (12).

8. Circuit selon la revendication 7 **caractérisé en ce que** ledit transistor (15) est un transistor à effet de champ de puissance.

9. Circuit selon la revendication 1 **caractérisé en ce que** ledit transformateur (Tr) comporte un enroulement de chauffage (18) pour le tube image (BR), et qu'une bobine (19a) est montée dans le trajet du courant de chauffage (iH) de telle manière que ladite bobine soit également parcourue par le courant (i3) fourni par un deuxième enroulement secondaire (22) dudit transformateur (Tr) (Fig. 6).

10. Circuit selon les revendications 5 et 8 **caractérisé en ce que** le deuxième enroulement secondaire (22) est celui servant à générer la seconde tension de service (U2).

11. Circuit selon la revendication 1 **caractérisé en ce que** la tension (U3) proportionnelle à la haute tension (UH) est déduite de la tension de focalisation.
